# FASCICULE DE BREVET EUROPEEN

(11) **EP 1 086 334 B1**
(45) Date de publication et mention de la délivrance du brevet: **25.02.2004**
(21) Numéro de dépôt: 99925068.1
(22) Date de dépôt: 11.06.1999
(51) Int. Cl.: F16P 3/14

(54) **DISPOSITIF DE PROTECTION INDIVIDUELLE CONTRE LES RISQUES MECANIQUES, ELECTRIQUES OU THERMIQUES**
PERSÖNLICHE SCHUTZVORRICHTUNG GEGEN MECHANISCHE, ELEKTRISCHE ODER THERMISCHE GEFAHREN
DEVICE FOR INDIVIDUAL PROTECTION AGAINST MECHANICAL, ELECTRICAL OR THERMAL RISKS

(30) Priorité: 16.06.1998 FR 9807720; 23.11.1998 FR 9814916
(43) Date de publication de la demande: 28.03.2001
(73) Titulaire: Intelligent Safety Development, 38330 Saint Ismier (FR)
(72) Inventeur: ANGELIDIS, Jean, F-38330 Saint Ismier (FR); HUET, Daniel, F-38330 Saint Ismier (FR)
(74) Mandataire: Hecké, Gérard
(86) Numéro de dépôt international: PCT/FR1999/001396
(87) Numéro de publication internationale: WO 1999/066253

(56) Documents cités:
- EP-A- 0 592 285
- CH-A- 361 344
- DE-A- 3 903 025
- DE-A- 4 410 009
- DE-A- 19 753 270
- FR-A- 1 564 099
- FR-A- 2 420 716
- FR-A- 2 658 586
- GB-A- 2 310 977
- US-A- 4 814 632
- US-A- 5 200 736
- US-A- 5 315 289
- US-A- 5 635 909

## Description

### Domaine technique de l'invention

L'invention est relative à un dispositif de protection individuelle contre les risques mécaniques, électrique ou thermique, pour la commande d'une machine dangereuse ou une intervention sur celle-ci par exemple.

La conception du dispositif garantit un maximum de liberté et de confort pour l'opérateur, tout en lui offrant une sécurité maximale, grâce à une définition précise du risque et de la proximité du danger.

### Etat de la technique

Le nombre de personnes concernées par des blessures aux mains, aux membres ou au corps ou victimes de chocs électriques ou thermiques, se chiffre dans le monde à plusieurs millions chaque année. Le coût financier direct qui en résulte est très élevé, tandis que le coût social reste lui-même inestimable.

La sécurité des personnes travaillant sur des machines dangereuses (presses, cisailles, scies machines à cylindres, robots...) est généralement assurée par des moyens mécaniques de protection, des barrières photoélectriques ou des capteurs capacitifs ou magnétiques. La protection obtenue avec de tels dispositifs nécessite des contraintes opératoires et des pertes de productivité sans assurer une sécurité totale.

De même, l'exposition aux risques électriques ou thermiques est normalement prévenue au moyen de procédures ( identification, consignation...) adéquates. Ces procédures sont plus difficiles à appliquer en cas d'accident et d'intervention en urgence et restent sujettes à l'erreur humaine.

Des solutions interactives générales ont déjà été proposées dans le document US-A-5,315,289, mais les principes de liberté opératoire et de confort optimaux n'ont pas été abordés. Il décrit un détecteur destiné à détecter un signal source délivré par un transmetteur solidarisé à un gant. Le transmetteur est activé manuellement ou automatiquement dès que l'opérateur a mis le gant.

La détection capacitive ou magnétique peut être très efficace mais elle ne distingue pas la pièce métallique de la main de l'opérateur, par exemple. Les émetteurs portés par l'opérateur, du type infrarouge ou électromagnétiques, doivent être multipliés autant de fois que l'on souhaite protéger différentes parties du corps.

Dans le document DE-A-4410009, on a cherché à positionner les émetteurs portés par l'opérateur. Des antennes détectent dans une zone dangereuse un signal issu d'un émetteur.

Le document GB-A- 2310977 fait mention de circuits souples, supports de circuits imprimés, mais qui ne sauraient servir de supports d'antennes déformables.

### Objet de l'invention

L'objet de la présente invention supprime les inconvénients précités, et consiste à améliorer la sécurité des personnes travaillant sur les machines outils ou dans des environnements dangereux.

L'objet de l'invention est atteint par un dispositif selon les revendications annexées.

### Description sommaire des dessins

D'autres avantages et caractéristiques ressortiront plus clairement des descriptions qui vont suivre de divers modes de réalisation de l'invention, donnés à titre d'exemples non limitatifs et représentés dans les dessins annexés, dans lesquels :
- la figure 1 est une vue schématique d'une machine-outil équipée d'un dispositif de protection selon l'art antérieur;
- la figure 2 est une variante de la figure 1;
- la figure 3 représente un schéma synoptique d'un circuit électronique à transmission radioélectrique d'un dispositif selon l'invention;
- la figure 4 montre une variante de la figure 3;
- la figure 5 est une vue schématique d'un vêtement de protection pour une intervention électrique à haute ou basse tension;
- la figure 6 montre un schéma synoptique du circuit de détection électronique équipant le vêtement de la figure 5;
- la figure 7 représente une variante de la figure 5 représentant un schéma du vêtement de protection thermique ;
- les figures 8A et 8B représentent une machine équipée d'un écran d'interposition représenté respectivement en position inactive de fonctionnement normal, et en position active de sécurité.

### Description détaillée de modes de réalisation préférentiels de l'invention

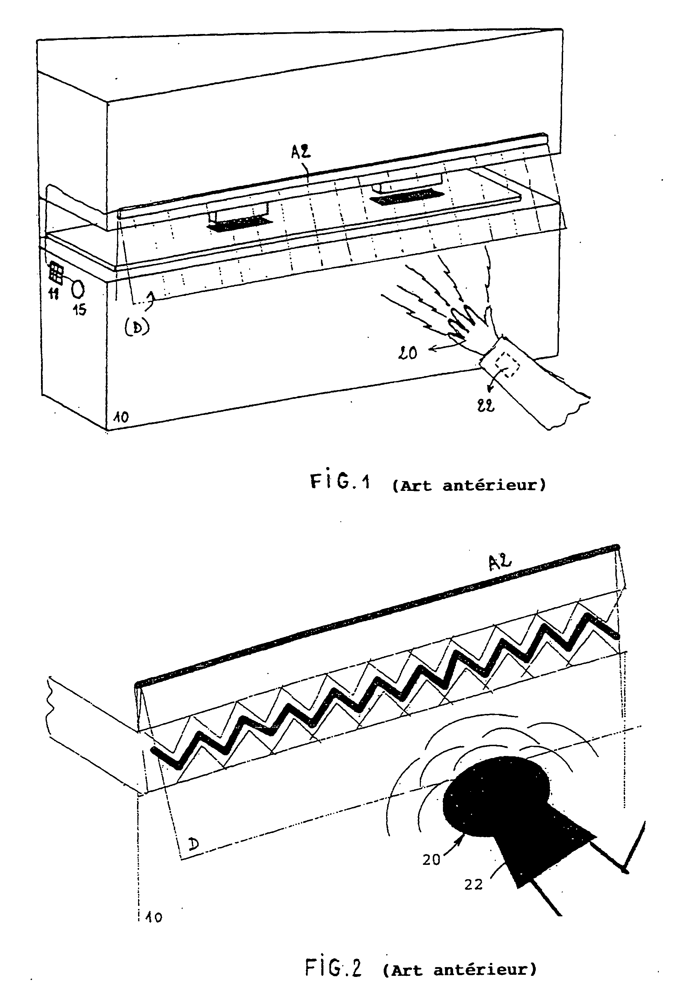

Sur la figure 1, une machine 10, notamment une presse d'emboutissage choisie à titre d'exemple, est équipée d'une antenne A2 reliée à un circuit électronique 11 et à un dispositif d'arrêt d'urgence 15.

L'opérateur est équipé d'un circuit électronique 22 émetteur bi-fréquence fixé sur un bracelet contact avec le poignet, et d'au moins un gant 20 comportant une feuille conductrice reliée à la masse du circuit d'alimentation 11. La feuille conductrice peut être avantageusement constituée d'un circuit imprimé souple tel que décrit dans le document EP 592 285.

La première fréquence est émise par le bracelet 22 directement vers l'antenne A2, et le circuit 11 autorise la mise en marche de la machine 10. La machine fonctionnera tant que la main de l'opérateur ne rencontrera pas la zone D de détection, située à la lisière du risque. Si la main traverse cette zone de détection D, la deuxième fréquence d'émission du bracelet 22 déclenche l'arrêt de la machine 10. Lors d'une opération normale de travail, si une tôle métallique est introduite à la main pour une opération d'emboutissage, la machine continue à fonctionner puisque l'isolation entre la main et la tôle inhibe l'émission du signal. Dans le cas du travail du bois, sur une scie par exemple, il n'est même pas besoin de porter de gant pour protéger l'opérateur et permettre le travail, étant donné que le bois ne transmet pas le signal de la main. Seul le port du bracelet 22 est alors contrôlé.

La figure 2 montre un opérateur exposé à un risque similaire, mais protégé par un gant émetteur 20 qui porte lui-même le circuit électronique 22 émetteur. Les composants sont montés sur un circuit imprimé souple de même que les antennes de prolongement de l'émission jusqu'à l'extrémité des cinq doigts. La protection s'effectue de la même manière et avec le même confort que dans la description de la figure 1.

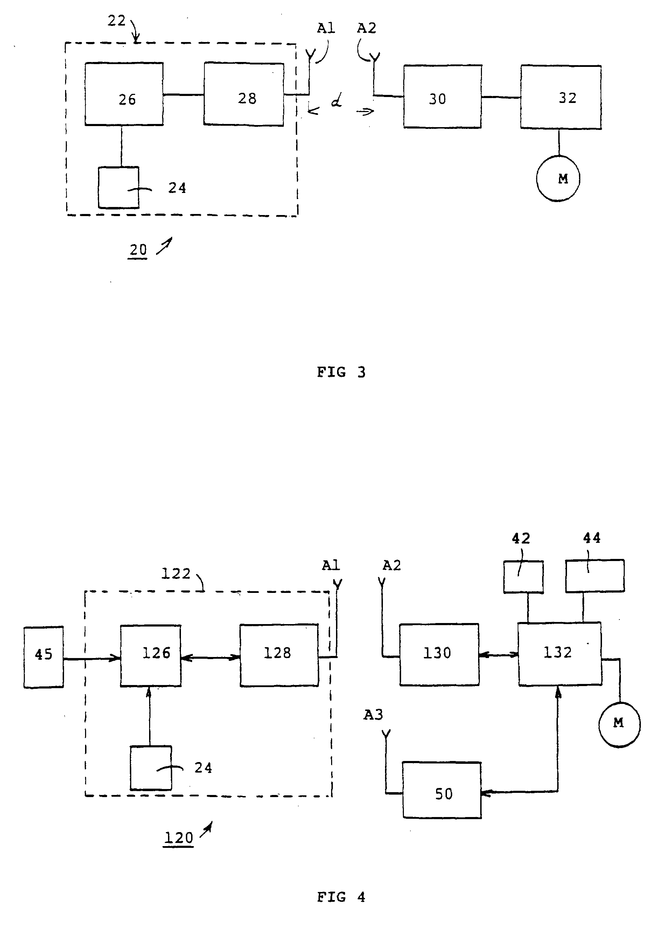

La figure 3 montre un premier mode de réalisation du circuit électronique 22 à transmission radioélectrique du signal codé. Un capteur 24 de présence de la main est connecté à un commutateur 26 de commande d'un circuit émetteur 28 à haute fréquence associé à une première antenne A1. Lorsque l'utilisateur enfile le gant 20, le capteur 24 délivre un signal logique de déblocage au commutateur 26 pour autoriser le fonctionnement du circuit émetteur 28, lequel émet un signal codé à haute fréquence par la main ou la première antenne A1. La détection de la main à l'intérieur du gant 20 s'effectue au moyen d'un capteur 24 de détection du tissu humain.

Si l'opérateur oublie ou néglige de porter le gant 20, le capteur 24 reste inactif entraînant le blocage du commutateur 26 pour inhiber le fonctionnement du circuit émetteur 28.

L'émission du signal codé par la main ou la première antenne A1, est captée au niveau de la machine 10 par une deuxième antenne A2 fixe couplée à un circuit récepteur 30 constituant le premier détecteur des figures 1 et 2. Le circuit récepteur 30 est connecté à un circuit de décodage 32 destiné à piloter la mise en service ou l'arrêt de la machine 10.

Le circuit de décodage 32 est agencé pour valider le fonctionnement de la machine 10 si la deuxième antenne A2 capte le signal codé à haute fréquence en provenance du gant 20, et si la distance séparant la main ou la première antenne A1 de la deuxième antenne A2 est suffisante. Cette distance est réglable depuis le circuit récepteur 30.

Selon la variante de la figure 4, le circuit de décodage 132 de la machine est doté d'un microprocesseur à sécurité positive, auquel sont raccordés un clavier 42 pour l'entrée de paramètres et du code d'accès, et un afficheur 44 de contrôle. L'ensemble clavier 42 et afficheur 44 est porté par un support fixé au bâti au voisinage de la table de travail.

Le gant 120 comporte un premier circuit émetteur-récepteur 128 associé à la main ou à la première antenne A1 pour émettre le signal codé à haute fréquence. L'émission est autorisée après validation par le capteur 24 de la présence de la main, lequel est branché à un circuit électronique de codage-décodage 126. Un commutateur d'arrêt d'urgence 45 est connecté au circuit 126 pour stopper l'émission en cas d'incident, entraînant l'arrêt immédiat de la machine 10.

Au niveau de la machine, la deuxième antenne A2 est couplée à un deuxième circuit émetteur-récepteur 130 relié au circuit de décodage 132 pour détecter le signal codé en provenance de la main ou la première antenne A1, de manière à stopper la machine 10 lorsque la main ou le gant 20 atteint la zone dangereuse. L'utilisateur tape au préalable un code d'accès sur le clavier 42 pour éviter la mise en service de la machine 10 par une personne non habilitée.

Une troisième antenne A3 est placée dans une zone de lecture située sur la table de travail à l'avant ou sous la zone dangereuse. La troisième antenne A3 est associée à un circuit émetteur-récepteur 50, lequel est branché au circuit de décodage 132 pour constituer un deuxième détecteur lequel vérifie en permanence l'émission par le gant 20 de signal codé à haute fréquence, signifiant le bon fonctionnement du premier circuit émetteur récepteur 128 lorsque le gant 20 se trouve dans la zone de lecture.

Un accumulateur est monté sur le circuit imprimé du gant 20 pour l'alimentation des circuits 126,128. Un circuit d'alimentation est prévu dans la machine 10 pour les différents circuits 130,132,50. l'accumulateur peut être supprimé dans le gant 20, en cas d'utilisation d'un circuit d'alimentation par induction logé dans la zone de lecture.

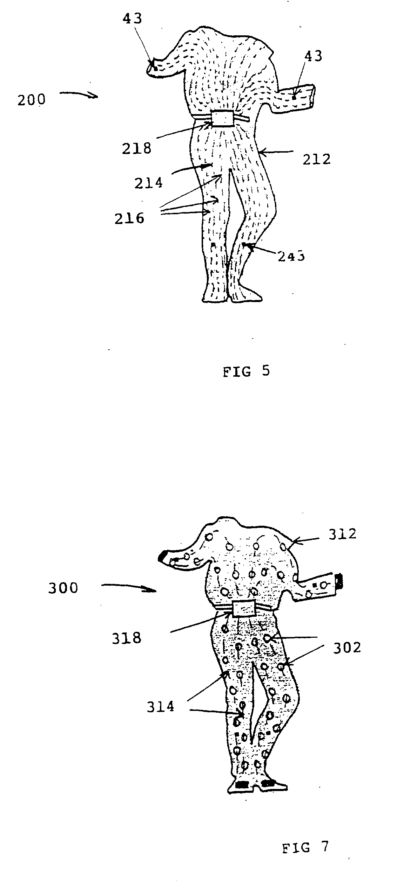

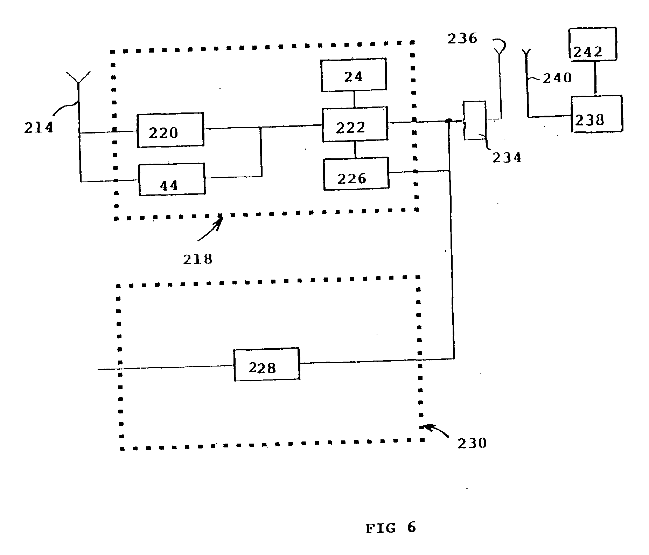

En référence aux figures 5 et 6, un équipement 200 de protection individuelle pour un opérateur de maintenance intervenant sur des installations ou appareillages électriques à haute ou basse tension, comporte un vêtement 212 en matériau isolant, équipé d'un réseau antenne 214 à pistes conductrices réparties sur toute la surface. Le vêtement 212 est formé à titre d'exemple par une combinaison à base de tissu souple, mais il est clair que la combinaison peut également être complétée par une cagoule et des gants ou des surchausses.

Les pistes conductrices 216 du réseau antenne 214 sont connectées électriquement à un circuit de détection 218 électronique constituant le noeud du réseau antenne 214. Le circuit de détection 218 est doté d'un capteur de champ électrique 220 destiné à capter le courant engendré dans le réseau antenne 214 en présence d'un champ électrique extérieur dû aux conducteurs sous tension de l'installation.

Le capteur de champ électrique 220 comprend à titre d'exemple un dispositif d'écoulement du courant électrique du réseau antenne 214 à travers un filtre passe-haut. Ce dernier est connecté à un commutateur 222 électronique associé à un avertisseur sonore et/ou visuel, l'ensemble étant alimenté par un accumulateur 226. La fréquence du signal d'alarme émis par l'avertisseur 224 augmente lorsque le signal de sortie du filtre passe-haut croît.

Le capteur de champ électrique 220 peut aussi être formé par un condensateur, une cellule à effet Hall, ou tout autre élément détecteur équivalent.

La sortie du commutateur 222 peut également être reliée à un actionneur 228 local constitué à titre d'exemple par un vibreur électromagnétique logé dans un boîtier 230 distinct en contact avec le corps de l'utilisateur.

Un circuit émetteur-récepteur à radiofréquences est associé au circuit de détection 218 pour transmettre à distance le signal d'alarme du commutateur 222 vers un poste de surveillance. Le commutateur 222 est connecté à cet effet à un circuit de transmission 234 associé à une première antenne 236 coopérant par voie radioélectrique avec un récepteur 238 muni d'une deuxième antenne 240. Le récepteur 238 est en liaison avec un écran de signalisation 242 ou tout autre dispositif d'analyse du signal d'alarme.

Le fonctionnement correct de l'équipement 200 est assuré par des moyens de test formés à titre d'exemple par des générateurs de courant 243, lesquels sont répartis sur le vêtement 212 pour injecter en permanence un courant de base dans le réseau antenne 214. Le circuit de détection 218 électronique comporte un filtre passe-bas destiné à capter le courant de base pour valider le fonctionnement normal de l'équipement 200. Un signal de non-fonctionnement est transmis par le filtre passe-bas en cas d'absence du courant de base.

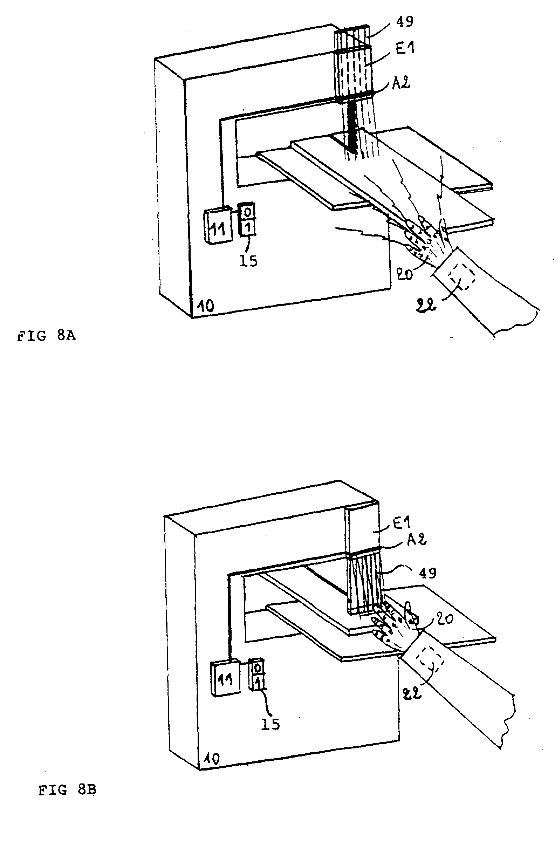

Sur la figure 7, un équipement 300 individuel de protection est conçu pour un pompier ou tout autre opérateur soumis à des risques d'exposition thermique. Des détecteurs thermosensibles 302 sont répartis sur le vêtement 312, en étant connectés électriquement au réseau antenne 314 en liaison avec le circuit de détection électronique 318. La sortie de ce dernier fournit un signal d'alarme en cas de dépassement d'un seuil haut ou bas de température.

A la température ambiante, les détecteurs thermosensibles 302, par exemple des photodiodes à infrarouge ou des commutateurs thermostatiques, constituent les moyens de test qui fournissent en permanence le courant de base détecté par le filtre passe-bas 44 pour valider le fonctionnement de l'équipement 300.

Dans les deux cas d'utilisation des équipements 200 et 300, le filtre passe-haut du circuit de détection électronique 218 et 318, déclenche l'avertisseur de danger avec l'émission d'un premier signal d'alarme, tandis que le filtre passe-bas 44 signale le non-fonctionnement du système de protection, par exemple au moyen d'un deuxième signal d'alarme sonore ou visuel différent du premier.

La transmission vers un récepteur extérieur des premier et deuxième signaux d'alarme au moyen du circuit émetteur-récepteur 234 à radiofréquences, permet une intervention locale additionnelle ou une élimination du risque électrique ou thermique, par exemple par ouverture du disjoncteur ou du sectionneur alimentant l'installation électrique, ou par ouverture des vannes du circuit d'incendie.

Les figures 8A et 8B illustrent l'utilisation d'un écran E1 complémentaire de protection sur une machine 10 équipée d'une scie à ruban, pour laquelle il n'est pas possible d'arrêter la lame instantanément, sauf à la détériorer, par un dispositif de freinage par exemple.

Ici, l'opérateur travaille avec un bracelet émetteur 22 en contact avec son poignet. La main 20 n'est pas nécessairement gantée, puisque la pièce à travailler est en matériau non transmetteur, notamment en bois ou en polymère. La détection de l'émission à haute fréquence par l'antenne A2 et le circuit électronique 11 valide le port du bracelet émetteur 22, et autorise le fonctionnement de la scie à ruban ( figure 8 A ).

Derrière l'antenne A2 se trouve l'écran E1 constitué de barres 49 retenues à l'aide d'un électro-aimant (non représenté).

Si la main pénètre dans la zone de danger correspondant à la détection de l'émission à basse fréquence par l'antenne A2 ( figure 8 B), la commande d'arrêt de la scie est déclenchée par le circuit électronique 11, mais la scie ne peut s'arrêter immédiatement. L'électro-aimant cesse d'être alimenté, et les barres 49 tombent rapidement ( environ 20 ms de temps de chute, en général ). Les barres 49 font alors obstacle au passage de la main et préviennent l'accident.

Cette protection est utilisable sur tout type de machine présentant une inertie à l'arrêt, et l'écran peut prendre toute forme et arriver de n'importe quel côté, de son propre poids ou sous l'influence d'un ressort ou de n'importe quelle autre force. La forme divisée de l'écran lui permet de défendre l'accès, même autour de pièces de forme plus complexe. On peut aller jusqu'à l'utilisation d'un coussin gonflable, dans des cas d'extrême urgence, plus particulièrement pour défendre l'accès aux machines à cylindres.

## Revendications

1. Dispositif de sécurité mécanique, électrique ou thermique pour la commande d'une machine dangereuse, et comprenant un gant (20), un vêtement ( 200, 300) ou un accessoire de protection équipés de circuits électroniques de transmission d'un signal codé de surveillance, le dispositif comportant de plus:
- un support de réception des circuits électroniques faisant partie du gant (20), vêtement (200, 300), ou accessoire,
- des premiers moyens pour isoler partiellement le corps afin de canaliser l'émission,
- des seconds moyens pour avertir l'utilisateur ou inhiber le signal codé lorsque ledit gant, vêtement ou accessoire n'est pas enfilé ou porté correctement par l'utilisateur,
- un premier détecteur (30, 130) solidaire du bâti de la machine (10), pour capter le signal codé et arrêter la machine, ou déclencher l'alerte lorsque ledit gant, vêtement ou accessoire franchit une zone dangereuse de débattement d'un outil, ou de proximité du risque, ou lorsque le signal codé de mesure reçu ne correspond pas à celui attendu, ou en l'absence dudit signal codé,
- des troisièmes moyens d'alarme pour avertir l'utilisateur du dispositif de sécurité lorsque le signal codé de mesure est supérieur à un premier seuil d'alerte ou de danger, ou en cas de non-fonctionnement du système de protection, par franchissement d'un seuil bas prédéterminé,
**caractérisé en ce que**
le support des circuits électroniques est formé par un circuit imprimé souple en liaison avec des antennes d'émission-réception constituant un réseau d'antennes (214, 314) réparties sur toute la surface de gant (20) ou vêtement (200, 300) isolant, et que des moyens inhibent l'émission du signal codé lorsque la continuité du réseau d'antennes (214, 314) est interrompue.

2. Dispositif de sécurité selon la revendication 1, **caractérisé en ce que** le réseau d'antennes (214, 314) comporte des premiers capteurs de champ électrique (220), de rayonnements ionisants ou de chaleur (302) destinés à délivrer un signal de mesure représentatif du courant électrique engendré par le réseau antenne, en présence d'un champ électrique, d'une source radioactive ou de chaleur près de l'utilisateur.

3. Dispositif de sécurité selon la revendication 1, **caractérisé en ce que** les premiers moyens pour isoler le corps sont constitués de tissus ou plaques parfaitement pliables et réalisés en matériau isolant thermique, ou électrique ou électromagnétique

4. Dispositif de sécurité selon la revendication 3, **caractérisé en ce que** le tissu pliable servant de support aux circuits imprimés et antennes, est constitué par un dépôt d'un métal ou alliage conducteur à travers un masque sur un tissu rendu conducteur par dépôt de polymère, la souplesse du tissu étant rétablie par enlèvement dudit polymère conducteur après le dépôt électrolytique des pistes conductrices.

5. Dispositif de sécurité selon la revendication 4, **caractérisé en ce que** les pistes de métal (216) conducteur ou alliage conducteur sont collées sur le tissu ou vêtement à partir de fils, tresses, poudres ou gels colloïdaux de métal ou alliage.

6. Dispositif de sécurité selon la revendication 3, **caractérisé en ce que** le tissu est rendu conducteur par insertion de fibres de métal, imprégnation dans un bain conducteur, dépose par sédimentation, par dépôt sous vide CVD, PVD... et tous autres procédés différents connus capables de rendre un tissu totalement ou partiellement conducteur.

7. Dispositif de sécurité selon la revendication 1, **caractérisé en ce que** les seconds moyens comprennent au moins un capteur (24) de détection du tissu humain, et un avertisseur relié au circuit électronique de détection et de mesure des signaux.

8. Dispositif de sécurité selon la revendication 7, **caractérisé en ce que** le capteur (24) détecte le tissu humain par voie infrarouge, capacitive ou conductrice, par détection du pouls, identification de l'empreinte ou de l'iris ou moyen d'un micro-contact mécanique.

9. Dispositif de sécurité selon la revendication 1, **caractérisé en ce que** les troisièmes moyens d'alarme comportent au moins un avertisseur sonore ou visuel à fonctionnement continu ou intermittent, ou un vibreur électromécanique (228) logé dans un boîtier en contact direct ou non avec le corps.

10. Dispositif de sécurité selon la revendication 9, **caractérisé en ce que** la ou les autres personnes reçoivent l'information d'alerte au moyen d'un émetteur radio (234, 238) relié aux circuits électroniques portés par l'utilisateur.

11. Dispositif de sécurité selon la revendication 1, **caractérisé en ce que** le signal de surveillance est émis par le corps, au moyen d'un bracelet (22) ou de tout autre accessoire émetteur en contact électrique avec la peau, ledit bracelet ou accessoire comprenant un deuxième circuit d'émission, à haute fréquence, pour validation du port dudit bracelet ou accessoire auprès de la machine dangereuse.

12. Dispositif de sécurité selon la revendication 1, **caractérisé en ce qu'**au moins un premier émetteur (28, 128, 218)) associé au gant (20), vêtement (200, 300), ou accessoire, émet par le réseau antenne (214, 314) ou le corps, un signal électromagnétique vers un premier détecteur solidaire du bâti machine, lequel comporte un circuit récepteur (30, 130), ou un deuxième détecteur à circuit émetteur-récepteur associé à une antenne (A2) à sensibilité réglable, et logé dans une zone de lecture pour contrôler l'émission permanente dudit signal codé.

13. Dispositif de sécurité selon la revendication 12, **caractérisé en ce que** le deuxième détecteur comporte une troisième antenne (A3) logée dans la zone de lecture et couplée avec un troisième circuit émetteur-récepteur, connecté avec le deuxième circuit émetteur-récepteur à un circuit de décodage (132) à microprocesseur, auquel sont raccordés un clavier (42) et un afficheur (44) de contrôle.

14. Dispositif de sécurité selon la revendication 1, **caractérisé en ce que** le premier détecteur coopère avec un dispositif de protection muni d'un écran (E1) qui s'interpose entre l'utilisateur et le danger, en cas de déclenchement de l'arrêt d'urgence.

15. Dispositif de sécurité selon la revendication 14, **caractérisé en ce que** l'écran (E1) d'interposition est composé de lamelles, tiges ou barres (49) indépendantes, rigides ou semi-rigides coopérant avec un actionneur, notamment un électro-aimant, pour s'interposer après déverrouillage sous l'action de la pesanteur, ou de moyens de rappel.

16. Dispositif de sécurité selon la revendication 14, **caractérisé en ce que** l'écran (E1) est constitué de coussins gonflables.

17. Dispositif de sécurité selon la revendication 2, **caractérisé en ce que** le capteur de champ électrique est réalisé au moyen d'un condensateur, d'un commutateur à effet Hall ou d'un dispositif à écoulement de courant, connectés au réseau antenne.

18. Dispositif de sécurité selon la revendication 1, **caractérisé en ce que** des détecteurs thermosensibles (302) sont réalisés au moyen de diodes infrarouges, de spectromètres ou de commutateurs thermostatiques répartis sur le réseau antenne.

19. Dispositif de sécurité selon la revendication 2, **caractérisé en ce que** la détection des rayonnements ionisants est réalisée au moyen de capteurs de rayonnement α, β, γ.

20. Dispositif de sécurité selon la revendication 1, **caractérisé en ce que** l'antenne de détection sur la machine ou sur l'utilisateur, est constituée d'une paire émetteur-récepteur en communication permanente, la distance entre les deux éléments de ladite paire étant accordée sur la fréquence du signal de danger en restant quasi-insensible aux perturbations électromagnétiques environnantes.

21. Dispositif de sécurité selon la revendication 1, **caractérisé en ce que** les fréquences utilisées pour le test de fonctionnement concernant la continuité d'émission, et le code, ou pour la transmission d'informations à distance, sont de préférence supérieures à 100 kHz, afin de minimiser la consommation d'énergie, tandis que la détection du danger est réalisée à des fréquences inférieures à 1 GHz, pour une meilleure précision de la détection.

22. Dispositif de sécurité selon la revendication 1, **caractérisé en ce que** le signal de détection du risque est dérivé une ou deux fois par rapport au temps, ou comparé à une abaque expérimentale, ou traité par logique floue ou un réseau de neurones, pour estimer la vitesse d'approche du risque, et anticiper l'alarme ou la protection.

23. Dispositif de sécurité selon la revendication 22, **caractérisé en ce qu'**une analyse spectrale simple est utilisée pour affiner la précision des abaques et adapter le calcul aux conditions observées, notamment dans le cas de détection de chaleur.

## Claims

1. A mechanical, electrical or thermal safety device for control of a dangerous machine, and comprising a glove (20), garment (200, 300) or accessory equipped with electronic circuits for transmission of an encoded monitoring signal, comprising in addition:
- a reception support of said electronic circuits forming part of the glove (20), garment (200, 300), or accessory,
- first means for partially insulating said body in order to channel transmission
- second means to inform the user or disable the transmitted encoded signal when said glove, garment or accessory is not put on or worn correctly by the user,
- a first detector (30, 130) secured to the frame of the machine (10) to pick up the encoded signal and stop the machine, trigger the alarm when said glove, garment or accessory enters a dangerous movement zone of a tool, or a risk proximity zone, or when the encoded measurement signal received doesn't correspond to that which was expected, or in the absence of said encoded signal,
- third alarm means to warn the user of the safety device or / and any other person, when the encoded measurement signal is greater than a first alarm or danger threshold, or in the event of the protection system not operating, by exceeding a preset low threshold,
**characterized in that**
the support of said electronic circuits is formed by a foldable printed circuit connected to transceiver antennas forming a network of distributed antennas (214, 314) located on the whole surface of the glove (20), or insulating garment (200, 300), and that means prevent transmission of the encoded signal when the continuity of the antenna network (214, 314) is interrupted.

2. The safety device according to claim 1, **characterized in that** the antenna network (214, 314) comprises first electrical field sensors (220), ionizing radiation sensors or heat sensors (302) designed to deliver a measurement signal representative of the electrical current generated by the antenna network, in the presence of an electrical field, a radioactive or heat source near the user.

3. The safety device according to claim 1, **characterized in that** the first means for insulating the body are formed by perfectly foldable tissues or plates made of thermal, or electrical or electromagnetic insulating material.

4. The safety device according to claim 3, **characterized in that** the foldable tissue acting as support for the printed circuits and antennas is formed by a deposit of a conducting metal or alloy through a mask onto a tissue made conducting by polymer deposit, the flexibility of the tissue being re-established by removal of said conducting polymer after electrolytic deposit of the conducting tracks.

5. The safety device according to claim 4, **characterized in that** the conducting metal or conducting alloy tracks (216) are bonded to the tissue or garment by means of wires, braids, colloidal powders or gels made of metal or alloy.

6. The safety device according to claim 3, **characterized in that** the tissue is rendered conducting by insertion of metal fibers, impregnation in a conducting bath, deposit by sedimentation, by CVD, PVD vacuum deposit... and all other different known processes capable of making a tissue totally or partially conducting.

7. The safety device according to claim 1, **characterized in that** the second means comprise at least one human tissue detection sensor (24), and an alarm connected to the electronic signal detection and measurement circuit.

8. The safety device according to claim 7, **characterized in that** the sensor (24) detects human tissue by infrared, capacitive or conducting means, by pulse detection or fingerprint or iris identification, or by means of a mechanical micro-contact.

9. The safety device according to claim 1, **characterized in that** the third alarm means comprise at least one audio or visual alarm with continuous or intermittent operation, or even an electromechanical vibrator (228) housed in a case in direct contact or not with the body.

10. The safety device according to claim 9, **characterized in that** the other person(s) receive the alarm information by means of a radio transmitter (234, 238) connected to the electronic circuits carried by the user.

11. The safety device according to claim 1, **characterized in that** the monitoring signal is emitted by the body by means of a bracelet (22) or any other emitting accessory in electrical contact with the skin, said bracelet or accessory comprising a second, high-frequency, transmission circuit for validation of wearing of said bracelet or accessory near the dangerous machine.

12. The safety device according to claim 1, **characterized in that** at least one first transmitter (28, 128, 218) associated to the glove (20), garment (200, 300) or accessory transmits, via the antenna network (214, 314) or the body, an electromagnetic signal to a first detector secured to the machine frame comprising a receiver circuit (30, 130), or a second detector with a transceiver circuit associated to an antenna (A2) with adjustable sensitivity housed in a reading zone to check continuous transmission of the encoded signal.

13. The safety device according to claim 12, **characterized in that** the second detector comprises a third antenna (A3) housed in the reading zone and coupled with a third transceiver circuit connected with the second transceiver circuit to a microprocessor-based decoding circuit (132), to which a keypad (42) and monitoring display (44) are connected.

14. The safety device according to claim 1, **characterized in that** the first detector cooperates with a protective device comprising a shield (E1) which places itself between the user and the danger, if emergency stopping is triggered.

15. The safety device according to claim 14, **characterized in that** the interposed shield (E1) is formed by rigid or semi-rigid, independent strips, rods or bars (49) operating in conjunction with an actuator, notably an electromagnet, to be interposed after unlocking due to the action of gravity or of return means.

16. The safety device according to claim 14, **characterized in that** the shield (E1) is formed by inflatable cushions.

17. The safety device according to claim 2, **characterized in that** the electrical field sensor is achieved by means of a capacitor, a Hall effect switch or a current flow device, connected to the antenna network.

18. The safety device according to claim 1, **characterized in that** the heat-sensitive detectors (302) are achieved by means of infrared diodes, spectrometers or thermostatic switches distributed over the antenna network.

19. The safety device according to claim 2, **characterized in that** detection of the ionizing radiations is performed by means of α, β, γ radiation sensors.

20. The safety device according to claim 1, **characterized in that** the detection antenna on the machine or on the user is formed by a transceiver pair in permanent communication, the distance between the two elements of said pair being tuned to the frequency of the danger signal and remaining almost insensitive to electromagnetic disturbances from the surrounding environment.

21. The safety device according to claim 1, **characterized in that** the frequencies used for testing operation concerning continuity of transmission, and the code, or for remote information transmission, are preferably greater than 100 kHz, in order to minimize the energy consumption, whereas detection of danger is performed at frequencies lower than 1 GHz for a better detection precision.

22. The safety device according to claim 1, **characterized in that** the derivative of the risk detection signal is calculated once or twice with respect to time, or the risk detection signal is compared to an experimental graph, or processed by fuzzy logic or a neuron network, to estimate the speed of approach of the risk and anticipate alarm or protection.

23. The safety device according to claim 22, **characterized in that** a simple spectral analysis is used to tune the precision of the graphs and adapt calculation to the observed conditions, in particular in the case of heat detection.

## Patentansprüche

1. Mechanische, elektrische oder thermische Sicherheitsvorrichtung zum Steuern einer gefährlichen Maschine, und umfassend einen Handschuh (20), ein Kleidungsstück (200, 300) oder ein Schutzzubehör, die mit elektronischen Schaltungen zur Übertragung eines codierten Kontrollsignals versehen sind, wobei die Vorrichtung ferner umfasst:
- eine Halterung zur Aufnahme der elektronischen Schaltungen, die Teil des Handschuhs (20), Kleidungsstücks (200, 300) oder Zubehörs sind,
- erste Vorrichtungen zur parziellen Isolierung des Körpers zur Kanalisierung der Übertragung,
- zweite Mittel zum Warnen des Benutzers oder zur Unterdrückung des codierten Signals, wenn der Handschuh, das Kleidungsstück oder das Zubehör vom Benutzer nicht richtig angezogen wurde oder getragen wird,
- ein erster, fest mit dem Rahmen der Maschine (10) verbundener Messfühler (30, 130) zur Erfassung des codierten Signals und zum Stoppen der Maschine oder Auslösen des Alarms, wenn der Handschuh, das Kleidungsstück oder das Zubehör einen gefährlichen Bewegungsbereich eines Werkzeugs oder einen Bereich überschreitet, der zu nah an der Gefahr liegt, oder wenn das codierte Messsignal nicht dem erwarteten entspricht, oder wenn das codierte Signal überhaupt nicht übertragen wird,
- dritte Mittel zum Auslösen eines Alarms, mit dem der Benutzer der Sicherheitsvorrichtung gewarnt wird, wenn das codierte Messsignal einen bestimmten Alarm- oder Gefahrenschwellenwert überschreitet oder bei einem Ausfall des Schutzsystems, durch Überschreiten eines vorbestimmten unteren Schwellenwerts,
**dadurch gekennzeichnet, dass**
die Halterung der elektronischen Schaltungen von einer biegsamen gedruckten Schaltung gebildet wird, die an Sende-Empfangs-Antennen angeschlossen ist, die ein Netz von Antennen (214, 314) bilden, die über die ganze Oberfläche des isolierenden Handschuhs (20) oder Kleidungsstücks (200, 300) verteilt sind, und dass Vorrichtungen die Übertragung des codierten Signals verhindern, wenn die Kontinuität des Antennennetzes (214, 314) unterbrochen ist.

2. Sicherheitsvorrichtung nach Anspruch 1, **dadurch gekennzeichnet, dass** das Antennennetz (214, 314) erste elektrische Feld-Sensoren (220) für ionisierende Strahlung oder Wärme (302) umfasst, die vorgesehen sind, ein Messsignal abzugeben, das den von dem Antennennetz erzeugten Strom bei Vorhandensein eines elektrischen Feldes, einer radioaktiven Quelle oder Wärme in der Nähe des Benutzers wiedergibt.

3. Sicherheitsvorrichtung nach Anspruch 1, **dadurch gekennzeichnet, dass** die ersten Mittel zur Isolierung des Körpers aus gut zu faltenden Geweben oder Plättchen aus isolierendem thermischen, elektrischen oder elektromagnetischen Material bestehen.

4. Sicherheitsvorrichtung nach Anspruch 3, **dadurch gekennzeichnet, dass** das faltbare Gewebe, das als Halterung für die gedruckten Schaltungen und Antennen dient, aus einer Abscheidung aus einem leitenden Metall oder einer leitenden Legierung durch eine Maske hindurch auf einem durch Polymerablagerung leitend gemachten Gewebe besteht, wobei die Dehnbarkeit des Gewebes nach dem elektrolytischen Aufbringen der Leiterbahnen durch Entfernen des leitenden Polymers wieder hergestellt wird.

5. Sicherheitsvorrichtung nach Anspruch 4, **dadurch gekennzeichnet, dass** die Bahnen aus leitendem Metall (216) oder leitender Legierung auf das Gewebe oder Kleidungsstück auf der Grundlage von Fäden, Geflechten, Pulvern oder Kolloidgelen aus Metall oder Legierung geklebt werden.

6. Sicherheitsvorrichtung nach Anspruch 3, **dadurch gekennzeichnet, dass** das Gewebe durch Einziehen von Metallfasern, Imprägnieren in einem leitenden Bad, Abscheiden durch Sedimentierung, CVD-, PVD-Vakuumbeschichtung... und beliebige andere bekannte Verfahren leitend gemacht wird, die geeignet sind, ein Gewebe vollständig oder teilweise leitend zu machen.

7. Sicherheitsvorrichtung nach Anspruch 1, **dadurch gekennzeichnet, dass** die zweiten Mittel mindestens einen Sensor (24) zum Erkennen von menschlichem Gewebe und einen Warnmelder umfasst, der an die elektrische Schaltung zur Erkennung und Messung der Signale angelegt ist.

8. Sicherheitsvorrichtung nach Anspruch 7, **dadurch gekennzeichnet, dass** der Sensor (24) das menschliche Gewebe durch Infrarot, auf kapazitivem oder leitendem Weg, durch Pulserkennung, Fingerabdruck- oder Iriserkennung mittels eines mechanischen Mikrokontakts erkennt.

9. Sicherheitsvorrichtung nach Anspruch 1, **dadurch gekennzeichnet, dass** die dritten Mittel, die der Alarmauslösung dienen, mindestens einen Ton-oder Sicht-Warnmelder mit kontinuierlicher oder intermittierender Funktion oder einen elektromechanischen Vibrator (228) umfassen, der in einem Gehäuse angeordnet ist, das mit dem Körper in direktem Kontakt oder in keinem direkten Kontakt steht.

10. Sicherheitsvorrichtung nach Anspruch 9, **dadurch gekennzeichnet, dass** die andere/n Person/en die Warnmeldung mittels eines Funksenders (234, 238) erhalten, der mit den vom Benutzer getragenen elektronischen Schaltungen verbunden ist.

11. Sicherheitsvorrichtung nach Anspruch 1, **dadurch gekennzeichnet, dass** das Überwachungssignal vom Körper ausgestrahlt wird, und zwar mittels eines Armbands (22) oder eines beliebigen anderen Sendezubehörs, das elektrisch in Kontakt mit der Haut steht, welches Armband oder Zubehör einen zweiten Sendekreis, und zwar einen Hochfrequenzsendekreis, zum Bestätigen des Tragens des Armbands oder Zubehörs an der gefährlichen Maschine umfasst.

12. Sicherheitsvorrichtung nach Anspruch 1, **dadurch gekennzeichnet, dass** mindestens ein erster, an den Handschuh (20), das Kleidungsstück (200, 300) oder das Zubehör angeschlossener Sender (28, 128, 218) über das Antennennetz (214, 314) oder den Körper ein elektromagnetisches Signal an einen ersten Messfühler schickt, der fest mit dem Rahmen der Maschine verbunden ist, welcher einen Empfangsschaltkreis (30, 130) umfasst, oder einen zweiten Messfühler mit einem Sende-Empfangs-Schaltkreis, der an eine Antenne (A2) mit einstellbarer Empfindlichkeit gekoppelt und zur Kontrolle der permanenten Übertragung des codierten Signals in einem Lesebereich angeordnet ist.

13. Sicherheitsvorrichtung nach Anspruch 12, **dadurch gekennzeichnet, dass** der zweite Messfühler eine dritte Antenne (A3) umfasst, die sich in dem Lesebereich befindet und mit einem dritten Sende-Empfangs-Schaltkreis gekoppelt ist, der mit dem zweiten Sende-Empfangs-Schaltkreis an eine Decodierschaltung (132) mit Mikroprozessor gelegt ist, an den eine Tastatur (42) und ein Kontrollbildschirm (44) angeschlossen sind.

14. Sicherheitsvorrichtung nach Anspruch 1, **dadurch gekennzeichnet, dass** der erste Messfühler mit einer Schutzvorrichtung zusammenwirkt, die mit einer Abschirmung (E1) versehen ist, die sich bei Auslösen des Not-Aus zwischen den Benutzer und die Gefahr setzt.

15. Sicherheitsvorrichtung nach Anspruch 14, **dadurch gekennzeichnet, dass** die Abschirmung (E1) zum Dazwischensetzen aus getrennten Lamellen, Stangen oder Stäben (49) besteht, die starr oder halbstarr sind und mit einer Betätigungseinrichtung, insbesondere einem Elektromagneten, zusammenwirken, um nach der Entriegelung durch Wirkung der Schwerkraft oder von Rückholmitteln dazwischengesetzt zu werden.

16. Sicherheitsvorrichtung nach Anspruch 14, **dadurch gekennzeichnet, dass** die Abschirmung (E1) aus aufblasbaren Kissen besteht.

17. Sicherheitsvorrichtung nach Anspruch 2, **dadurch gekennzeichnet, dass** der elektrische Feldsensor mittels eines Kondensators, eines Schalters mit Halleffekt oder einer Strom-Fluss-Vorrichtung ausgeführt ist, die an das Antennennetz angeschlossen sind.

18. Sicherheitsvorrichtung nach Anspruch 1, **dadurch gekennzeichnet, dass** die wärmeempfindlichen Messfühler (302) mittels Infrarotdioden, Spektrometern oder Thermostatikschaltern ausgeführt sind, die über das Antennennetz verteilt sind.

19. Sicherheitsvorrichtung nach Anspruch 2, **dadurch gekennzeichnet, dass** die Erfassung der ionisierenden Strahlen mittels Strahlungssensoren α, β, γ erfolgt.

20. Sicherheitsvorrichtung nach Anspruch 1, **dadurch gekennzeichnet, dass** die Erfassungsantenne an der Maschine oder an dem Benutzer aus einem Sende-Empfänger-Paar besteht, das in ständiger Verbindung steht, wobei der Abstand zwischen den beiden Elementen dieses Paars auf die Frequenz des Gefahrensignals abgestimmt ist, dabei jedoch quasi unempfindlich für elektromagnetische Umgebungsstörungen bleibt.

21. Sicherheitsvorrichtung nach Anspruch 1, **dadurch gekennzeichnet, dass** die für den Funktionstest betreffend die Kontinuität der Ausstrahlung und den Code oder für die Fernübertragung von Informationen genutzten Frequenzen vorzugsweise bei über 100 Hz liegen, um den Energieverbrauch zu minimieren, während die Erkennung der Gefahr auf Frequenzen zum Erreichen einer größeren Erfassungspräzision unter 1 GHz erfolgt.

22. Sicherheitsvorrichtung nach Anspruch 1, **dadurch gekennzeichnet, dass** das Gefahrerkennungssignal bezogen auf die Zeit ein- oder zweimal abgeleitet wird oder mit einem Erfahrungsdiagramm verglichen wird oder mit Fuzzy-Logik oder einem Neuronnetz verarbeitet wird, um die Geschwindigkeit des Herannahens der Gefahr einzuschätzen und den Alarm oder den Schutz vorwegzunehmen.

23. Sicherheitsvorrichtung nach Anspruch 22, **dadurch gekennzeichnet, dass** eine einfache Spektralanalyse zur Erhöhung der Präzision der Diagramme und Anpassung der Berechnung an die festgestellten Bedingungen verwendet wird, insbesondere, wenn Hitzeentwicklung festgestellt wird.
